# FASCICULE DE BREVET EUROPEEN

(11) **EP 0 459 849 B1**
(45) Date de publication et mention de la délivrance du brevet: **08.09.1993**
(21) Numéro de dépôt: 91401152.3
(22) Date de dépôt: 30.04.1991
(51) Int. Cl.: B60R 19/24

(54) **Pare-chocs à fixation réglable pour véhicule automobile**
Einstellbare Befestigungsvorrichtung für eine Fahrzeugstossstange
Adjustable mounting for motor vehicule bumper

(30) Priorité: 30.05.1990 FR 9006732
(43) Date de publication de la demande: 04.12.1991
(73) Titulaire: AUTOMOBILES PEUGEOT, 75116 Paris (FR); AUTOMOBILES CITROEN, 92200 Neuilly-sur-Seine (FR)
(72) Inventeur: Bodilis, Jean-Claude, F-94600 Choisy Le Roi (FR)
(74) Mandataire: Beauchamps, Georges

(56) Documents cités:
- EP-A- 0 169 747
- DE-A- 3 626 150

## Description

La présente invention se rapporte d'une manière générale à un pare-chocs et concerne plus particulièrement les moyens de fixation de ce pare-chocs sur un véhicule automobile.

On a proposé depuis longtemps des pare-chocs pour véhicule automobile, du type comprenant une partie transversale pouvant être montée à l'aide de moyens de clippage, sur la partie avant ou arrière du véhicule, ainsi que des extrémités latéralement rabattues et pouvant être fixées sur le côté du véhicule (voir, par exemple, le document EP-A- 0 169 747).

Toutefois, les moyens de clippage de la partie transversale du pare-chocs ne permettaient pas un réglage précis de la position de montage des extrémités latéralement rabattues sur les côtés du véhicule. C'est pour cette raison qu'il était difficile de monter ces pare-chocs en alignement avec les lignes de la carrosserie telles que les découpes de roues formées dans les ailes du véhicule, ce qui nuisait à l'esthétique de ce dernier.

Il convenait par conséquent de proposer un pare-chocs perfectionné et qui permette, grâce à un réglage de sa position de montage sur le véhicule, d'éviter les décrochements entre les extrémités latéralement rabattues du pare-chocs et les lignes de la carrosserie du véhicule.

A cet effet, l'invention a pour objet un pare-chocs pour véhicule automobile, du type comprenant une partie transversale pouvant être montée, à l'aide de moyens de clippage, sur la partie avant ou arrière du véhicule, ainsi que des extrémités latéralement rabattues et pouvant être fixées sur le côté du véhicule, caractérisé en ce que lesdits moyens de clippage sont constitués par des écrous allongés, préalablement montés par clippage et à coulissement dans des fourreaux formés dans la partie transversale du pare-chocs et pouvant être fixés par vissage sur la partie avant ou arrière du véhicule pour permettre ensuite le réglage de la position des extrémités latéralement rabattues du pare-chocs, en vue de leur fixation sur les côtés du véhicule.

Suivant une autre caractéristique de l'invention, chaque écrou allongé comporte deux portées de guidage à section polygonale, telle que par exemple carrée, et comporte à une extrémité une collerette d'appui contre la caisse du véhicule, et à son autre extrémité des ergots ou analogues de retenue de l'écrou allongé dans le fourreau.

On précisera encore ici que les deux portées précitées, dont l'une porte à son extrémité libre les ergots précités et dont l'autre porte la collerette précitée, présentent en section transversale des dimensions différentes et sont raccordées l'une à l'autre par une partie en forme de pyramide tronquée.

Selon encore une autre caractéristique de l'invention, la portée de guidage de section plus petite porte les ergots précités, tandis que la portée de guidage de section plus grande porte la colerette précitée.

L'invention est encore caractérisée en ce que chaque écrou allongé est constitué par une pièce monobloc, en matière plastique par exemple, traversée de part en part par un orifice taraudé.

Selon encore une autre caractéristique de l'invention, l'orifice taraudé précité coopère avec une vis traversant avec jeu un élément de la caisse comportant un orifice de forme telle qu'il permet le réglage du pare-chocs suivant deux directions perpendiculaires situées dans un plan orthogonal à la direction longitudinale du véhicule.

En outre, l'invention est caractérisée en ce que les extrémités latéralement rabattues du pare-chocs sont fixées par vissage au côté du véhicule, et ce par l'intermédiaire d'entretoises.

La présente invention ressortira mieux de la description détaillée d'un mode de réalisation, qui suit et se réfère aux dessins annexés, donnés uniquement à titre d'exemple, et dans lesquels:

La figure 1 est une demi-vue de dessus d'un pare-chocs suivant l'invention, monté sur un véhicule automobile.

La figure 2 est une vue en coupe suivant la ligne II-II de la figure 1, et montrant le pare-chocs monté sur un véhicule.

La figure 3 est une vue en coupe suivant la ligne III-III de la figure 2 et montrant la forme en section transversale d'un fourreau et d'un écrou allongé permettant le montage guidé du pare-chocs.

La figure 4 est une vue en perspective d'un exemple de réalisation d'un écrou allongé suivant l'invention.

Suivant l'exemple de réalisation illustré sur les figures, un pare-chocs 1 comprend essentiellement une partie transversale 2, constituée par un bouclier 3 fixé sur une traverse de renfort 4, ainsi que des extrémités latéralement rabattues 5. des entretoises 6 solidaires des extrémités 5 du pare-chocs sont fixées sur les côtés de poutres 8 de la caisse du véhicule, par l'intermédiaire de pattes 7.

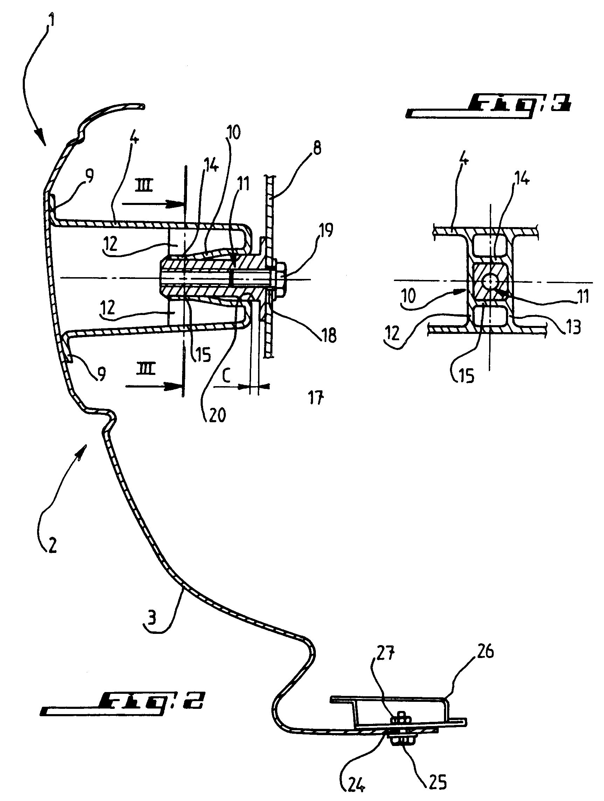

Comme on le voit bien sur la figure 2, la traverse de renfort 4 a une section transversale en forme de U dont les extrémités des branches comportent des pattes 9 qui sont fixées sur la face arrière du bouclier 3. Au niveau du raccordement entre la partie transversale 2 du pare-chocs 1 avec ses extrémités rabattues 5, la traverse 4 est munie de fourreaux 10 dans lesquels viennent se loger des écrous allongés 11. Les fourreaux 10 et les écrous allongés 11 constituent les moyens de clippage de la partie transversale 2 du pare-chocs, qui seront décrits en détail ci-après.

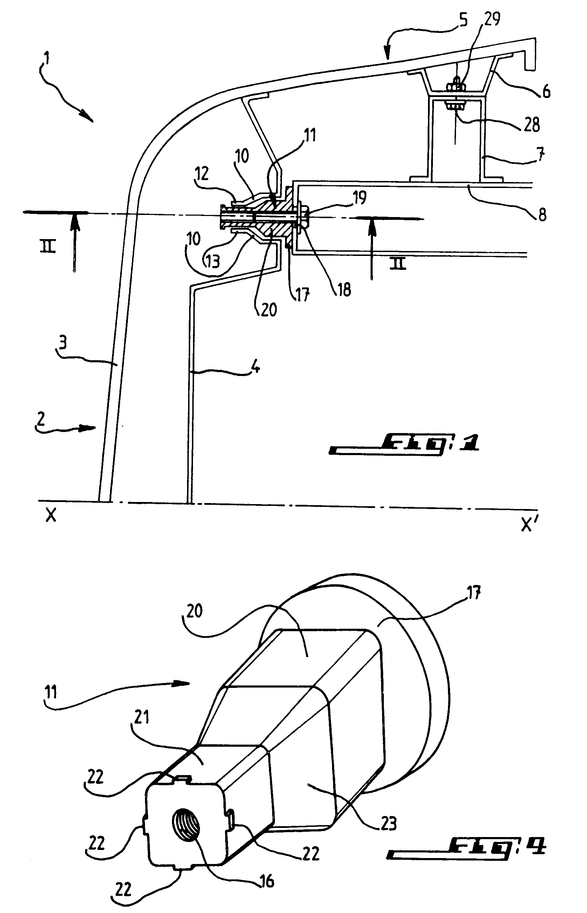

Suivant le mode de réalisation illustré, chaque fourreau 10 s'étend parallèlement à la direction longitudinale X-X' du véhicule (figure 1), depuis la base du U défini par la section de la traverse de renfort 4 du pare-chocs 1. En se reportant aux figures 2 et 3, on voit que chaque fourreau 10 est constitué par deux nervures 12 et 13 qui relient les deux branches du U et qui viennent de matière avec la traverse 4. Deux autres nervures 14 et 15 s'étendent, orthogonalement entre les nervures 12 et 13 pour former un logement débouchant constituant le fourreau 10, de section transversale sensiblement carrée, et dans lequel l'écrou allongé 11 est monté par clippage et à coulissement. On voit bien sur les figures 1 et 2 que le fourreau 10 qui est constitué par les nervures 12, 13, 14, 15, présente une forme généralement effilée qui épouse sur sensiblement toute sa longueur la forme de l'écrou allongé 11 y coulissant et qui va maintenant être décrit.

Cet écrou allongé 11 est constitué, suivant l'exemple de réalisation visible sur la figure 4, par une pièce monobloc, par exemple moulée en matière plastique, et traversée sur toute sa longueur par un perçage fileté 16. Tout comme le fourreau 10, l'écrou allongé 11 est de forme généralement effilée et son extrémité 20 de section la plus grande comporte une collerette 17 qui fait office de base d'appui contre une extrémité de la poutre 8 de la caisse. Le perçage fileté 16 débouche au centre de cette collerette 17 de manière à être placé, en position de montage du pare-chocs 1, au regard d'un orifice 18 formé dans la poutre 8 de la caisse du véhicule et apte à recevoir une vis de fixation 19, comme on le voit sur les figures 1 et 2.

Suivant le mode de réalisation illustré, l'orifice 18 a des dimensions supérieures au diamètre de la vis 19 pour permettre un jeu de réglage de l'écrou allongé 11 par rapport à la poutre 8 de la caisse du véhicule. Ce jeu permet de régler la position du pare-chocs suivant deux directions perpendiculaires situées dans un plan orthogonal à la direction longitudinale X-X' du véhicule. Ainsi le réglage vertical et le centrage latéral du pare-chocs 1 sont permis avant l'immobilisation de l'écrou 11 par serrage de la vis 19.

En se reportant à la figure 4, on voit que la collerette 17 de l'écrou allongé 11 est associée à une portée de guidage prismatique et droite constituant l'extrémité 20 de section sensiblement carrée et permettant le guidage de l'écrou 11 dans une première partie de forme correspondante du fourreau 10.

Une deuxième portée de guidage 21, elle aussi de forme prismatique droite, mais ayant une section carrée d'aire inférieure à celle de la portée 20, est située à l'extrémité de l'écrou 11 opposée à la collerette 17.

Cette deuxième portée 21 permet le guidage de l'écrou 11 dans une deuxième partie de guidage de forme correspondante du fourreau 10. On notera ici que la deuxième portée de guidage 21 de l'écrou 11 comporte, à son extrémité libre et opposée à la collerette 17, des ergots 22 qui font saillie de chacune des faces du prisme droit formant la portée 21. Ces ergots 22 permettent de retenir par clippage l'écrou allongé 11 dans le fourreau 10, c'est-à-dire permettent de maintenir assemblés l'écrou 11 et le fourreau 10, tout en autorisant le coulissement de l'écrou 11 suivant la direction X-X'.

Les deux portées de guidage 20 et 21 de l'écrou 11 sont reliées l'une à l'autre par un prisme oblique ou pyramide tronquée 23 qui possède à son extrémité de base une section sensiblement carrée et égale à celle de la portée 20, alors que son autre extrémité présente une section d'aire réduite et confondue avec la section de base de la portée de guidage 21.

On comprend aisément que les portées 20 et 21 permettent le guidage et le coulissement de l'écrou allongé 11 dans le fourreau 10. A cet effet, l'écrou 11 est monté avec un jeu suffisant dans le fourreau 10. On a repéré en C sur la figure 2 la distance maximale suivant la direction X-X' entre le fourreau 10 et la collerette 17, et qui correspond à la valeur maximale du coulissement de l'écrou 11 dans le fourreau 10 après clippage. Cette distance C correspond à l'espace entre la collerette 17 et le fourreau 10 lorsque les ergots 22 sont en butée contre l'autre extrémité de ce fourreau.

On voit sur la figure 2 que le pare-chocs 1 comporte à la partie inférieure du bouclier 3 un perçage 24 permettant le passage d'une vis de montage 25. Cette vis de montage 25 peut être montée sur le pare-chocs 1 de façon à faire saillie à l'intérieur d'une poutre 26 solidaire de la caisse du véhicule, et de façon à fixer la partie inférieure du bouclier 3 sur la poutre 26 à l'aide d'un écrou 27.

On a repéré en 28 et 29 sur la figure 1, une vis et un écrou respectivement, permettant la fixation de chaque entretoise 6 solidaire de chaque extrémité latéralement rabattue 5 du pare-chocs, sur les pattes 7 de la caisse du véhicule.

Le montage du pare-chocs qui vient d'être décrit va maintenant être brièvement expliqué.

Tout d'abord, un écrou allongé 11 est engagé par coulissement dans chaque fourreau 10 de la traverse 4 et est enfoncé jusqu'à ce que les ergots 22 de la portée 21 fassent saillie du fourreau et entre les branches du U formé par la traverse 4. L'écrou 11 est ainsi monté par clippage et à coulissement sur la traverse 4 du pare-chocs 1.

Le pare-chocs 1 est alors amené vers le véhicule sur lequel il doit être fixé. Les collerette 17 de chaque écrou 11 sont mises en appui contre les extrémités des poutres 8 du véhicule, avec les perçages filetés 16 au regard des orifices 18 de ces poutres. On engage alors les vis 19 dans les perçages filetés 16 des écrous 11 et on ajuste la position du pare-chocs 1 suivant deux directions perpendiculaires situées dans un même plan orthogonal à la direction longitudinale X-X' du véhicule.

En d'autres termes, le jeu existant entre les orifices 18 et les vis 19 permet le réglage vertical et le centrage transversal ou latéral de la position du pare-chocs 1, par rapport à la caisse du véhicule. Ce réglage permet donc de centrer et d'ajuster la hauteur des entretoises 6 et du perçage 24 par rapport à leur point d'ancrage sur les pattes 7 et sur la poutre 26 respectivement. Une fois ce premier réglage effectué les vis 19 sont serrées dans les perçages filetés 16 des écrous 11 afin de fixer ces derniers sur la caisse.

Ensuite, grâce au coulissement des écrous allongés 11 dans les fourreaux 10 suivant la direction longitudinale X-X' du véhicule, il est possible de régler la position longitudinale du pare-chocs pour permettre l'ajustement précis des perçages dans lesquels viennent se loger les vis de montage 28 et 25. Une fois ces vis montées, le pare-chocs 1 est fixé par serrage des écrous correspondants 29 et 27. Puisque les extrémités latéralement rabattues 5 du pare-chocs 1 sont fixées à l'aide de vis sur la caisse du véhicule, il est possible d'éviter des décrochements entre les lignes de style des découpes de roues des ailes et les lignes de style des extrémités latéralement rabattues.

On a donc réalisé suivant l'invention un pare-chocs qui peut être facilement positionné et solidement fixé à l'avant ou à l'arrière d'un véhicule automobile, et qui en conséquence permet d'éviter les décrochements entre les lignes de style de la caisse du véhicule et du pare-chocs.

## Revendications

1. Pare-chocs pour véhicule automobile, du type comprenant une partie transversale (2) pouvant être montée, à l'aide de moyens de clippage, sur la partie avant ou arrière du véhicule, ainsi que des extrémités (5) latéralement rabattues et pouvant être fixées sur le côté du véhicule, caractérisé en ce que lesdits moyens de clippage sont constitués par des écrous allongés (11), préalablement montés par clippage et à coulissement dans des fourreaux (10) formés dans la partie transversale (2) du pare-chocs (1) et pouvant être fixés par vissage, sur la partie avant ou arrière du véhicule, pour permettre ensuite le réglage de la position des extrémités latéralement rabattues (5) du pare-chocs (1), en vue de leur fixation sur les côtés du véhicule.

2. Pare-chocs selon la revendication 1, caractérisé en ce que chaque écrou allongé (11) comporte deux portées de guidage (20, 21) à sections polygonales, telles que par exemple carrées, et comporte à une extrémité une collerette (17) d'appui contre la caisse (8) du véhicule et à son autre extrémité des ergots ou analogues (22) de retenue de l'écrou allongé (11) dans le fourreau (10).

3. Pare-chocs selon la revendication 2, caractérisé en ce que les deux portées précitées (20, 21) dont l'une (21) porte à son extrémité libre les ergots précités (22), et dont l'autre (20) porte la collerette précitée (17), présentent en section transversale des dimensions différentes et sont raccordées l'une à l'autre par une partie (23) en forme de pyramide tronquée.

4. Pare-chocs selon la revendication 2 ou 3, caractérisé en ce que la portée de guidage (21) de section plus petite porte les ergots précités (22), tandis que la portée de guidage (20) de section plus grande porte la collerette précitée (17).

5. Pare-chocs selon l'une des revendications précédentes, caractérisé en ce que chaque écrou allongé (11) est constitué par une pièce monobloc, en matière plastique par exemple, traversée de part en part par un orifice taraudé (16).

6. Pare-chocs selon l'une des revendications précédentes, caractérisé en ce que l'orifice taraudé précité (16) coopère avec une vis (19) traversant avec jeu un élément (8) de la caisse comportant un orifice (18) de forme telle qu'il permet le réglage du pare-chocs (1) suivant deux directions perpendiculaires situées dans un plan orthogonal à la direction longitudinale (X-X') du véhicule.

7. Pare-chocs selon l'une des revendications précédentes, caractérisé en ce que les extrémités latéralement rabattues (5) du pare-chocs (1) sont fixées par vissage au côté du véhicule, et ce par l'intermédiaire d'entretoises (6).

## Patentansprüche

1. Stoßstange für ein Kraftfahrzeug, derjenigen Gattung mit einem mit Hilfe von Klemmmitteln an dem vorderen oder hinteren Teil des Fahrzeugs anbaubaren Querteil (2) sowie mit seitlich umgeschlagenen und an der Seite des Fahrzeugs befestigbaren Enden (5), dadurch gekennzeichnet, dass die besagten Klemmmittel durch längliche Muttern (11) gebildet sind, die vorher durch Einklemmen und Gleiten in in dem Querteil (2) der Stoßstange (1) gebildeten Hülsen (10) eingesetzt und durch Verschrauben an dem vorderen oder hinteren Teil des Fahrzeugs befestigbar sind, um sodann die Einstellung der Lage der seitlich umgeschlagenen Enden (5) der Stoßstange (1) zum Zweck deren Befestigung an den Seiten des Fahrzeugs zu gestatten.

2. Stoßstange nach Anspruch 1, dadurch gekennzeichnet, dass jede längliche Mutter (11) zwei Führungsbereiche (20, 21) mit vieleckigen wie z.B. quadratischen Querschnitten aufweist und an einem Ende einen Flansch (17) zur Abstützung an dem Kasten (8) des Fahrzeugs und an seinem anderen Ende Nasen oder dergleichen (22) zum Zurückhalten der länglichen Mutter (11) in der Hülse (10) aufweist.

3. Stoßstange nach Anspruch 2, dadurch gekennzeichnet, dass die beiden vorgenannten Führungsbereiche (20, 21), von denen der eine (21) an seinem freien Ende die vorgenannten Nasen (22) trägt und deren anderes Ende (20) den vorgenannten Flansch (17) trägt, im Querschnitt unterschiedliche Abmessungen aufweisen und miteinander durch einen Teil (23) in der Gestalt einer abgestumpften Pyramide aufweisen.

4. Stoßstange nach Anspruch 2 oder 3, dadurch gekennzeichnet, dass der Führungsbereich (21) mit dem kleineren Querschnitt die vorgenannten Nasen (22) trägt, während der Führungsbereich (20) mit dem grösseren Querschnitt den vorgenannten Flansch (17) trägt.

5. Stoßstange nach einem der vorangehenden Ansprüche, dadurch gekennzeichnet, dass jede längliche Mutter (11) durch ein von einem Gewindeloch (16) vollkommen durchsetztes einstückiges Element z.B. aus Kunststoff gebildet wird.

6. Stoßstange nach einem der vorangehenden Ansprüche, dadurch gekennzeichnet, dass das vorgenannte Gewindeloch (16) mit einer ein Element (8) des Kastens mit Spiel durchsetzenden Schraube (19) zusammenwirkt, welches eine Öffnung (18) derartiger Gestalt aufweist, dass sie das Einstellen der Stoßstange (1) entlang zwei in einer zu der Längsrichtung (X-X') des Fahrzeugs orthogonalen Ebene gelegenen zueinander senkrecht verlaufenden Richtungen gestattet.

7. Stoßstange nach einem der vorangehenden Ansprüche, dadurch gekennzeichnet, dass die seitlich umgeschlagenen Enden (5) der Stoßstange (1) durch Verschrauben und zwar über Stege (6) an der Seite des Fahrzeugs befestigt sind.

## Claims

1. Bumper for an automotive vehicle, of the type comprising a transverse part (2) which may be mounted with the assistance of clipping means onto the front or rear portion of the vehicle as well as sidewise backward turned ends (5) which may be fastened onto the side of the vehicle, characterized in that the said clipping means are constituted by elongated nuts (11) previously mounted through clipping and in sliding relationship into quills (10) formed in the transverse part (2) of the bumper (1) and which may be fastened by screwing onto the front or rear portion of the vehicle to then permit the adjustment of the position of the sidewise backward turned ends (5) of the bumper (1) with a view to fastening them onto the sides of the vehicle.

2. Bumper according to claim 1, characterized in that each elongated nut (11) comprises two guide being portions (20, 21) with polygonal such for example as square sections and comprises at one end a flange (17) for being upon the body (8) of the vehicle and at its other end lugs or the like (22) for retaining the elongated nut (11) within the quill (10).

3. Bumper according to claim 2, characterized in that both aforesaid being portions (20, 21) one (21) of which carries at its free end the aforesaid lugs (22) and the other one (20) of which carries the aforesaid flange (17) exhibit in cross-section different dimensions and are connected to each other by a portion (23) in the shape of a truncated pyramid.

4. Bumper according to claim 2 or 3, characterized in that the guide being portion (21) with the smaller section carries the aforesaid lugs (22) whereas the guide being portion (20) with a greater section carries the aforesaid flange (17).

5. Bumper according to one of the foregoing claims, characterized in that each elongated nut (11) is constituted by one integral piece for example of plastics material right through which emends a tapped opening (16).

6. Bumper according to one of the foregoing claims, characterized in that the aforsaid tapped opening (16) co-operates with a screw (19) extending with clearance through an element (8) of the body comprising an aperture (10) of such a shape that it permits the adjustment of the bumper (1) along two perpendicular directions located in a plane orthogonal to the longitudinal direction (X-X') of the vehicle.

7. Bumper according to one of the foregoing claims, characterized in that the sidewise backward turned ends (5) of the bumper (1) are fastened by screwing onto the side of the vehicle and this through the medium of braces (6).
